# EUROPÄISCHE PATENTSCHRIFT

(11) **EP 2 700 033 B1**
(45) Veröffentlichungstag und Bekanntmachung des Hinweises auf die Patenterteilung: **05.09.2018**
(21) Anmeldenummer: 12716254.3
(22) Anmeldetag: 19.04.2012
(51) Int. Cl.: G06F 21/84, G06F 21/64, H04W 12/10, H04W 12/12, H04L 29/06, H04M 1/725

(54) **VERFAHREN ZUR ANZEIGE VON INFORMATIONEN AUF EINER ANZEIGEEINRICHTUNG EINES ENDGERÄTS**
METHOD FOR DISPLAYING INFORMATION ON A DISPLAY DEVICE OF A TERMINAL
PROCÉDÉS D'AFFICHAGE D'INFORMATIONS SUR UN DISPOSITIF D'AFFICHAGE D'UN TERMINAL

(30) Priorität: 21.04.2011 DE 102011018431
(43) Veröffentlichungstag der Anmeldung: 26.02.2014
(73) Patentinhaber: Trustonic Limited, Cambridge CB1 2JD (GB)
(72) Erfinder: HEIDER, Axel, 81673 München (DE)
(74) Vertreter: D Young & Co LLP
(86) Internationale Anmeldenummer: PCT/EP2012/001700
(87) Internationale Veröffentlichungsnummer: WO 2012/143132

(56) Entgegenhaltungen:
- WO-A2-2008/106400
- DE-A1-102007 052 826
- US-A1- 2009 254 986

## Beschreibung

Die Erfindung betrifft ein Verfahren zur Anzeige von Informationen auf einer Anzeigeeinrichtung eines Endgeräts, insbesondere eines mobilen Endgeräts, sowie ein entsprechendes Endgerät.

Aus dem Stand der Technik ist bekannt, in einer Mikroprozessoreinheit eines Endgeräts neben einer normalen, nicht gesondert geschützten Laufzeitumgebung auch eine gesicherte Laufzeitumgebung zu implementieren, welche von der normalen Laufzeitumgebung isoliert ist und zur Ausführung von sicherheitskritischen Applikationen dient. Ein Beispiel einer solchen gesicherten Laufzeitumgebung ist die aus dem Stand der Technik bekannte ARM® TrustZone®. Innerhalb dieser TrustZone läuft dabei ein gesondertes Betriebssystem, wie z.B. das ebenfalls bekannte Betriebssystem MobiCore®.

Zur Kommunikation eines Benutzers mit einer entsprechenden Applikation in der gesicherten Laufzeitumgebung dient in der Regel eine im Endgerät vorgesehene Anzeigeeinrichtung, wobei beispielsweise ein separates Display bzw. ein separater Displaybereich als Benutzerschnittstelle für Applikationen aus der TrustZone vorgesehen sein kann. Ein Problem bei der Verwendung einer gesicherten Laufzeitumgebung parallel zu einer normalen Laufzeitumgebung besteht dabei darin, wie einem Benutzer möglichst manipulationssicher angezeigt werden kann, dass er gerade mit einer vertrauenswürdigen Applikation aus der gesicherten Laufzeitumgebung kommuniziert. Insbesondere sollen dabei Angriffe verhindert werden, welche einem Benutzer über eine manipulierte Applikation aus der normalen Laufzeitumgebung vortäuschen, dass er mit der gesicherten Laufzeitumgebung kommuniziert. In diesem Fall können über entsprechende Eingabeaufforderungen benutzerpersonenbezogene Daten, wie z B Passwörter, PINs und dergleichen von unbefugten Dritten, abgegriffen werden.

Aus dem Stand der Technik ist es bekannt, Endgeräte mit mehreren Anzeigeelementen auszustatten In der Druckschrift DE 29 22 222 A1 wird ein Endgerät mit zwei separat ansteuerbaren Anzeigeelementen beschrieben, wobei eines der Anzeigeelemente mit einem Sicherheitselement verbunden ist Auf diesem Anzeigeelement werden vertrauenswürdige Informationen wiedergegeben In der Druckschrift DE 6 24 7 152 T2 ist eine Mehrschichtanzeige für ein Endgerät offenbart, wobei über die Mehrschichtanzeige mehrere Teilinformationen überlagert werden. US2009/0254986 offenbart ein Verfahren zum Anzeigen von Informationen auf einer Anzeigeeinrichtung, das sich auf der Benutzung von einer Sicherheitszulassungsanweisung basiert. WO2008 /106400 offenbart eine Anzeigeeinrichtung mit zwei Anzeigelemente. DE102007052826 veroffenbart die Anzeige eines gesicherten Modus durch graphische Elemente.

Aufgabe der Erfindung ist es, Informationen auf einer Anzeigeeinrichtung eines Endgeräts derart wiederzugeben, dass einem Benutzer manipulationssicher angezeigt wird, ob die Informationen vertrauenswürdig sind.

Diese Aufgabe wird durch das Verfahren gemäss Patentanspruch 1 bzw das Endgerät gemäss Patentanspruch 13 gelöst Weiterbildungen der Erfindung sind in den abhängigen Ansprüchen definiert.

Das erfindungsgemässe Verfahren dient zur Anzeige von Informationen auf einer Anzeigeeinrichtung eines Endgeräts, bei dem es sich insbesondere um ein mobiles Endgerät, wie z B ein Mobiltelefon, ein PDA und dergleichen, handelt In dem Endgerät ist eine Mikroprozessoreinheit vorgesehen, in der eine normale Laufzeitumgebung und eine gesicherte Laufzeitumgebung implementiert sind, wobei Anzeigedaten zur Wiedergabe auf der Anzeigeeinrichtung über die normale Laufzeitumgebung und die gesicherte Laufzeitumgebung bereitstellbar sind.

Das erfindungsgemässe Verfahren zeichnet sich dadurch aus, dass über die normale Laufzeitumgebung bereitgestellte Anzeigedaten zumindest teilweise an die gesicherte Laufzeitumgebung übergeben werden, welche überprüft, ob die übergebenen Anzeigedaten ein oder mehrere Sicherheitskriterien erfüllen Die Sicherheitskriterien können beliebig ausgestaltet sein Sie müssen lediglich gewährleisten, dass bei Erfüllung der Sicherheitskriterien ein Benutzer den Anzeigedaten dahingehend vertrauen kann, dass sie nicht unbefugt manipuliert wurden Im Falle, dass die Anzeigedaten zumindest ein Sicherheitskriterium nicht erfüllen, werden in einer Variante der Erfindung die Anzeigedaten verworfen, dh überhaupt nicht zur Anzeige auf der Anzeigeeinrichtung gebracht Ebenso ist es möglich, dass die Anzeigedaten derart verändert werden, dass sie bei der anschliessenden Wiedergabe auf der Anzeigeeinrichtung von über die gesicherte Laufzeitumgebung bereitgestellten Anzeigedaten durch den Benutzer unterschieden werden können Auf diese Weise wird sichergestellt, dass für einen Benutzer auch bei manipulierten Applikationen erkennbar wird, ob die Applikation in der normalen oder gesicherten Laufzeitumgebung ausgeführt wird.

Das erfindungsgemässe Verfahren weist den Vorteil auf, dass eine Anzeigeeinrichtung sowohl von einer gesicherten Laufzeitumgebung als auch von einer normalen Laufzeitumgebung genutzt werden kann, wobei gleichzeitig gewährleistet ist, dass durch die Überprüfung entsprechender Sicherheitskriterien unbefugt manipulierte Applikationen erkannt werden können In einer bevorzugten Ausführungsform werden die an die gesicherte Laufzeitumgebung übergebenen Anzeigedaten im Falle, dass sie das oder die Sicherheitskriterien (d h alle Sicherheitskriterien) erfüllen, unverändert auf der Anzeigeeinrichtung wiedergegeben.

Das oder die oben beschriebenen Sicherheitskriterien umfassen das Kriterium, dass die übergebenen Anzeigedaten unterscheidbar zu über die gesicherte Laufzeitumgebung bereitgestellten Anzeigedaten bei deren Wiedergabe auf der Anzeigeeinrichtung sind Das heisst, wenn die Daten unterscheidbar sind, ist dieses Sicherheitskriterium erfüllt Die mangelnde Vertrauenswürdigkeit von Informationen ist in dieser Variante der Erfindung dabei unmittelbar an das Vortäuschen einer gesicherten Laufzeitumgebung basierend auf Anzeigedaten aus der normalen Laufzeitumgebung gekoppelt.

In einer besonders bevorzugten Ausführungsform wird das erfindungsgemässe Verfahren in einem Endgerät mit einer Anzeigeeinrichtung eingesetzt, welches ein erstes Anzeigeelement und ein zweites Anzeigeelement umfasst Dabei werden auf dem ersten Anzeigeelement ausschliesslich durch die normale Laufzeitumgebung bereitgestellte Anzeigedaten wiedergegeben In der Regel ist das erste Anzeigeelement dabei grösser als das zweite Anzeigeelement Demgegenüber werden auf dem zweiten Anzeigeelement im Rahmen der Erfindung sowohl durch die gesicherte Laufzeitumgebung bereitgestellte Anzeigedaten als auch durch die normale Laufzeitumgebung bereitgestellte Anzeigedaten wiedergegeben Dabei werden die durch die normale Laufzeitumgebung bereitgestellte Anzeigedaten, welche zur Wiedergabe auf dem zweiten Anzeigeelement vorgesehen sind, an die gesicherte Laufzeitumgebung übergeben und der erfindungsgemässen Überprüfung der Sicherheitskriterien unterzogen Auf diese Weise kann ein (zweites) Anzeigeelement, welches normalerweise nur von der gesicherten Laufzeitumgebung genutzt wird, auch für Applikationen aus der normalen Laufzeitumgebung verwendet werden, wobei durch die Überprüfung der obigen Sicherheitskriterien einem Missbrauch vorgebeugt wird.

Das erste und das zweite Anzeigeelement können ggf zwei separat angesteuerte Displays sein Ebenso besteht ggf die Möglichkeit, dass das erste und das zweite Anzeigeelement zwei Displaybereiche eines einzelnen Displays sind.

In einer besonders bevorzugten Ausführungsform der Erfindung wird als gesicherte Laufzeitumgebung die an sich bekannte ARM® TrustZone® verwendet, auf der vorzugsweise das ebenfalls bekannte Betriebssystem MobiCore® läuft In einer weiteren Variante der Erfindung ist das Endgerät ein Mobiltelefon, wobei auf der normalen Laufzeitumgebung das Betriebssystem des Mobiltelefons läuft Insbesondere handelt es sich bei dem Mobiltelefon um ein sog Smartphone, welches ein Betriebssystem mit erweitertem Funktionsumfang (auch als rich OS bezeichnet) verwendet.

Werden im Rahmen des erfindungsgemässen Verfahrens die an die gesicherte Laufzeitumgebung übergebenen Anzeigedaten im Falle der Nichterfüllung zumindest eines Sicherheitskriteriums verändert, so kann die Veränderung auf verschiedene Art und Weise erfolgen, wobei lediglich sichergestellt werden muss, dass für einen Benutzer erkennbar ist, dass die Anzeigedaten nicht über die gesicherte Laufzeitumgebung bereitgestellt wurden Dies kann beispielsweise durch die Hinzufügung einer Warnmeldung zu den Anzeigedaten erreicht werden Durch diese Warnmeldung wird der Benutzer daraufhingewiesen, dass die Anzeigedaten vorzutäuschen versuchen, dass sie von der gesicherten Laufzeitumgebung bereitgestellt werden, obwohl dies nicht der Fall ist Eine weitere Art der Veränderung der an die gesicherte Laufzeitumgebung übergebenen Anzeigedaten kann darin bestehen, dass ein oder mehrere vorbestimmte, in den übergebenen Anzeigedaten enthaltenen graphischen Elemente, anhand derer für einen Benutzer erkennbar ist, dass auf der Anzeigeeinrichtung wiedergegebene Anzeigedaten durch die gesicherte Laufzeitumgebung bereitgestellt werden, abgewandelt oder aus den Anzeigedaten entfernt werden.

In einer weiteren, besonders bevorzugten Ausführungsform erfolgt die Überprüfung der obigen Sicherheitskriterien basierend auf einer graphischen Analyse der Anzeigedaten Dabei analysiert die gesicherte Laufzeitumgebung die übergebenen Anzeigedaten dahingehend, ob sie ein oder mehrere vorbestimmte graphische Elemente enthalten, anhand derer für einen Benutzer erkennbar ist, dass auf der Anzeigeeinrichtung wiedergegebene Anzeigedaten durch die gesicherte Laufzeitumgebung bereitgestellt werden, wobei zumindest ein Sicherheitskriterium nicht erfüllt ist, falls die Anzeigedaten das oder die vorbestimmten graphischen Elemente umfassen.

Die oben beschriebenen graphischen Elemente, welche abgewandelt bzw aus den Anzeigedaten entfernt werden bzw im Rahmen der graphischen Analyse verarbeitet werden, können beliebig ausgestaltet sein Beispielsweise kann es sich um einen vorbestimmten Rahmen, insbesondere in einer vorbestimmten Farbe (z B rot), handeln Ebenso können die graphischen Elemente ein oder mehrere animierte Bildelemente und/oder einen Schriftzug umfassen, wie z B den Schriftzug "TrustZone aktiv".

Die von der gesicherten Laufzeitumgebung durchgeführte Überprüfung von Sicherheitskriterien kann ggf auch eine kryptographische Überprüfung umfassen Der Begriff der kryptographischen Überprüfung ist dabei weit zu verstehen Insbesondere umfasst die kryptographische Überprüfung auch die Überprüfung einer oder mehrerer digitaler Signaturen, welche in den an die gesicherte Laufzeitumgebung übergebenen Anzeigedaten enthalten sind Die Signaturüberprüfung kann dabei derart ausgestaltet sein, dass im Falle, dass die Signatur(en) gültig und/oder vertrauenswürdig sind, das entsprechende Sicherheitskriterium erfüllt ist Insbesondere besteht die Möglichkeit, dass im Rahmen der kryptographischen Überprüfung ein oder mehrere graphische Elemente in den übergebenen Anzeigedaten überprüft werden Vorzugsweise werden dabei eine oder mehrere digitale Signaturen, welche jeweils einem graphischen Element in den Anzeigedaten zugeordnet sind, überprüft Die Überprüfung kann dabei wiederum derart ausgestaltet sein, dass im Falle, dass die Signatur als gültig und/oder vertrauenswürdig eingestuft wird, das Sicherheitskriterium erfüllt ist.

Neben dem oben beschriebenen Verfahren betrifft die Erfindung auch ein Endgerät, insbesondere ein mobiles Endgerät Dieses Endgerät umfasst eine Mikroprozessoreinheit, in der eine normale Laufzeitumgebung und eine gesicherte Laufzeitumgebung implementiert sind, sowie eine Anzeigeeinrichtung, wobei Anzeigedaten zur Wiedergabe auf der Anzeigeeinrichtung über die normale Laufzeitumgebung und die gesicherte Laufzeitumgebung bereitgestellt werden können Das Endgerät ist dabei derart ausgestaltet, dass über die normale Laufzeitumgebung bereitgestellte Anzeigedaten zumindest teilweise an die gesicherte Laufzeitumgebung übergeben werden, welche überprüft, ob die übergebenen Anzeigedaten ein oder mehrere Sicherheitskriterien erfüllen, wobei die Anzeigedaten im Falle, dass sie zumindest ein Sicherheitskriterium nicht erfüllen, verworfen oder derart verändert werden, dass sie bei der anschliessenden Wiedergabe auf der Anzeigeeinrichtung von über die gesicherte Laufzeitumgebung bereitgestellten Anzeigedaten durch einen Benutzer unterschieden werden können. Das oder die Sicherheitskriterien umfassen das Kriterium, dass die übergebenen Anzeigedaten (DD2) unterscheidbar zu über die gesicherte Laufzeitumgebung (TZ) bereitgestellten Anzeigedaten bei deren Wiedergabe auf der Anzeigeeinrichtung (D1, D2) sind. Das erfindungsgemässe Endgerät ist dabei vorzugsweise derart ausgestaltet, dass mit dem Endgerät eine oder mehrere Varianten des oben beschriebenen erfindungsgemässen Verfahrens durchgeführt werden können

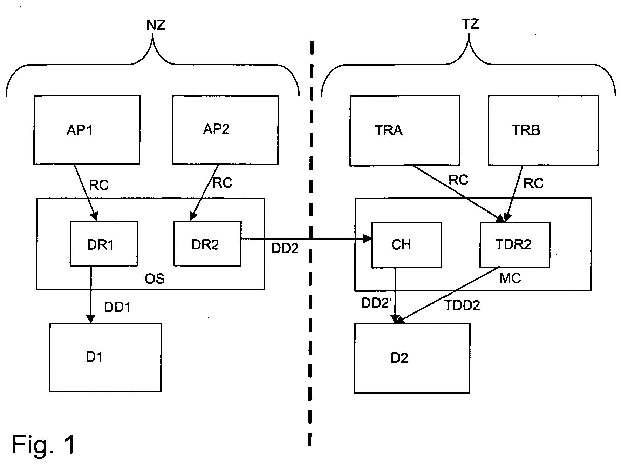

Ein Ausführungsbeispiel der Erfindung wird nachfolgend anhand der beigefügten fig 1 detailliert beschrieben Diese Figur zeigt eine schematische Darstellung eines Ablaufs einer Ausführungsform des erfindungsgemässen Verfahrens.

Nachfolgend wird ein Ausführungsbeispiel des erfindungsgemässen Verfahrens basierend auf einem Endgerät in der Form eines Mobiltelefons mit einer Anzeigeeinrichtung in der Form von zwei Anzeigeelementen bzw Displays beschrieben Die Displays bzw deren Hardware sind in fig 1 schematisch mit D1 und D2 bezeichnet In dem im Mobiltelefon verbauten Mikrocontroller sind eine normale Laufzeitumgebung NZ sowie eine gesicherte Laufzeit TZ in der Form einer sog ARM® TrustZone® implementiert In der hier beschriebenen Ausführungsform läuft auf der TrustZone das aus dem Stand der Technik bekannte Betriebssystem MobiCore®, das in fig 1 mit MC bezeichnet ist Demgegenüber enthält die normale Laufzeitumgebung ein herkömmliches Mobiltelefon-Betriebssystem OS Ist das Mobiltelefon ein Smartphone, ist das Betriebssystem ein sog rich OS mit einem weitreichenden Funktionsumfang Die TrustZone TZ dient zur Ausführung von sicherheitskritischen Anwendungen mit Hilfe des Mobiltelefons, wie z B zur Durchführung von Bezahlvorgängen bzw Bankanwendungen bzw anderen Anwendungen, bei denen persönliche benutzerspezifische Daten verarbeitet werden Die gesicherte Laufzeitumgebung ist dabei isoliert von der normalen Laufzeitumgebung und kapselt sicherheitskritische Prozesse, wodurch ein effizienter Schutz gegenüber Angriffen unbefugter Dritter erreicht wird Die innerhalb der TrustZone TZ laufenden sicherheitskritischen Applikationen werden als sog Trustlets bezeichnet, wobei in fig 1 beispielhaft die Trustlets TRA und TRB wiedergegeben sind Im Unterschied hierzu laufen in der normalen Laufzeitumgebung NZ herkömmliche Applikationen, welche in fig 1 beispielhaft mit AP1 und AP2 bezeichnet sind. Um eine Interaktion der Trustlets mit einem Benutzer zu ermöglichen, wird in dem Mobiltelefon das Display D2 verwendet, an dem ein Benutzer entsprechende Ausgaben der Trustlets ablesen kann und auch Eingaben mit Hilfe einer Tastatur tätigen kann. Dabei wird dem Benutzer graphisch angezeigt, dass die gerade laufende Anwendung aus der gesicherten Laufzeitumgebung stammt, was in der hier beschriebenen Ausführungsform über einen auf dem Display wiedergegebenen Rahmen erfolgt, der insbesondere in einer speziellen Farbe, wie z.B. rot, dargestellt ist. Gegebenenfalls bestehen auch andere Möglichkeiten, um den Benutzer graphisch über das Display D2 darauf hinzuweisen, dass er gerade mit einer Anwendung in der TrustZone kommuniziert. Insbesondere können für Trustlets spezielle Bilder bzw. Icons, wie z.B. animierte Icons, verwendet werden, oder es kann auf dem Display ein Schriftzug wiedergegeben werden, der darauf hinweist, dass die Displayanzeige eine Anwendung in der TrustZone betrifft. Beispielsweise kann dies durch Schriftzüge wie "TrustZone aktiv" oder "gesicherte Anzeige" erreicht werden.

In der Regel ist das Display D2 wesentlich kleiner als das Display D1, da über die Trustlets der TrustZone normalerweise kleinere Datenmengen verarbeitet und zur Anzeige gebracht werden. Erfindungsgemäß wird nunmehr die Möglichkeit geschaffen, dass über das kleinere Display D2 auch Applikationen aus der normalen Laufzeitumgebung NZ kommunizieren. Beispielsweise kann das Display D2 von Applikationen genutzt werden, welche kurze Statusmeldungen oder andere kurze Informationen wiedergeben, wie z.B. Kurznachrichten. Weitere Beispiele sind die Anzeige von MP3-Player-Software, die Anzeige, dass eine neue E-Mail oder SMS erhalten wurde, und dergleichen. In diesem Fall ist es nicht mehr notwendig, dass das große Display D1 für die Wiedergabe dieser kleinen Informationsmengen in Betrieb gehalten wird. Dies führt zu einem geringen Energieverbrauch und somit zu einer längeren Batterielaufzeit des Mobiltelefons.

Um dem Benutzer zu vermitteln, dass eine entsprechende, auf dem Display D2 wiedergegebene Applikation nicht aus der TrustZone stammt, werden die entsprechenden Markierungen bzw. graphische Elemente, welche die Verwendung eines Trustlets auf dem Display anzeigen (wie z.B. der oben beschriebene rote Rahmen), für Applikation in der normalen Laufzeitumgebung NZ weggelassen. Dabei besteht jedoch das Problem, dass durch den Zugriff auf das Display D2 über die normale Laufzeitumgebung mittels einer manipulierten Applikation vorgetäuscht werden kann, dass die Applikation in der TrustZone läuft, obwohl dies nicht der Fall ist. Durch die manipulierte Applikation kann der Benutzer, der meint, mit einem Trustlet sicher zu kommunizieren, dazu aufgefordert werden, persönliche Informationen einzugeben, wie z.B. Passwörter oder PINs, die dann durch die manipulierte Applikation abgegriffen werden. Um dieser Art von Angriffen entgegenzuwirken, erfolgt erfindungsgemäß innerhalb der TrustZone TZ eine Überprüfung der auf dem Display D2 wiederzugebenden Anzeigedaten aus der normalen Laufzeitumgebung, wie weiter unter näher erläutert wird.

In dem Szenario der Fig. 1 wechselwirkt die Applikation AP1 in der normalen Laufzeitumgebung NZ mit dem größeren Display D1. Hierzu werden entsprechende Render-Kommandos RC an einen für das Display D1 zuständigen Display-Renderer DR1 gegeben, der die Kommandos in pixelbasierte Anzeigedaten DD1 wandelt, welche auf dem Display D1 zur Anzeige gebracht werden. Analog wird zur Wiedergabe von Anzeigedaten der Trustlets TRA und TRB in der TrustZone TZ ein separater vertrauenswürdiger Display-Renderer TDR2 verwendet. Die entsprechenden Render-Kommandos RC der Trustlets TRA und TRB werden von diesem Renderer in pixelbasierte Anzeigedaten gewandelt, welche dann auf dem Display D2 wiedergegeben werden. Der Renderer TDR2 fügt dabei die entsprechenden Elemente (z.B. den oben erwähnten roten Rahmen) hinzu, anhand derer erkennbar wird, dass die Anzeigedaten aus der TrustZone stammen. Die Applikation AP2 unterscheidet sich von der Applikation AP1 darin, dass die erzeugten Anzeigedaten auf dem kleineren Display D2 wiederzugeben sind. Hierzu wird ein entsprechender Display-Renderer DR2 verwendet, der die Render-Kommandos der Applikation AP2 in pixelbasierte Anzeigedaten DD2 wandelt, welche für das Display D2 vorgesehen sind.

Zum Schutz gegen die oben erwähnten manipulierten Applikationen, welche mittels der Anzeigedaten DD2 eine aktive TrustZone vortäuschen, werden die Anzeigedaten DD2 an einen Algorithmus CH innerhalb des MobiCore-Betriebssystems MC übergeben, der diese Daten überprüft. Hierfür ist es dem MobiCore-Betriebssystem bekannt, auf welche Art und Weise eine aktive TrustZone auf dem Display D2 angezeigt wird. Dies kann beispielsweise durch den bereits oben beschriebenen roten Rahmen im Display D2 geschehen. Der Algorithmus CH überprüft in diesem Fall die zur Anzeige auf dem Display D2 vorgesehenen Anzeigedaten DD2 graphisch daraufhin, ob sich ein roter Rahmen um die anzuzeigenden Informationen befindet. Eine derartige Prüfung erfordert keine aufwändigen Algorithmen in der Bilderkennung und ist somit auf einem ressourcenbeschränkten Mobiltelefon leicht umsetzbar.

Wird nunmehr durch den Algorithmus CH erkannt, dass ein roter Rahmen oder eine ähnliche Darstellung in den Anzeigedaten DD2 enthalten ist, so wird dieser Rahmen vor der Anzeige aus den Pixeldaten DD2 zumindest teilweise entfernt bzw. so verändert, dass für den Benutzer des Displays D2 keine Verwechslungsgefahr mit dem roten Rahmen der TrustZone mehr besteht. Dies kann beispielsweise dadurch erreicht werden, dass der Rotanteil im Randbereich des Displays D2 vermindert wird, so dass der Rahmen nicht mehr in roter Farbe erscheint. Auf diese Weise wird der Benutzer des Mobiltelefons darüber informiert, dass die Applikation nicht in der TrustZone abläuft, so dass der Benutzer weiß, dass er möglichst keine personenbezogenen Daten bei der Interaktion mit der Applikation eingeben sollte, auch wenn nach solchen Daten gefragt wird. Die entsprechend veränderten und anschließend auf dem Display D2 angezeigten Pixeldaten sind dabei in Fig. 1 mit DD2' bezeichnet. Um die Sicherheit weiter zu erhöhen, können durch den Algorithmus CH die Pixeldaten gegebenenfalls auch komplett verworfen werden und/oder eine Warnung vor einem möglichen Angriff in dem Display D2 eingeblendet werden, so dass der Benutzer explizit darauf hingewiesen wird, dass er bei der Verwendung der Applikation möglichst keine personenbezogenen Daten eingeben sollte.

Anstatt eine aktive TrustZone über einen roten Rahmen anzuzeigen, kann dies auch über statische oder animierte Bilder erfolgen, wie bereits oben erwähnt wurde. In heutigen Betriebssystemen von Mobiltelefonen sind die verwendeten Bilder bzw. Animationen als Icons abgelegt und werden erst beim Rendern (d.h. Zeichnen) des Fensterinhalts in den entsprechenden Grafikspeicher kopiert. Die Icons werden üblicherweise nicht zur Laufzeit der Applikation erzeugt, sondern bereits bei der Software-Entwicklung bzw. Software-Erstellung für die entsprechende Applikation. Wird auf eine aktive TrustZone nunmehr durch animierte Icons hingewiesen, gestaltet sich die graphische Prüfung, ob entsprechende Anzeigedaten DD2 solche Icons zur Vortäuschung einer TrustZone enthalten, deutlich schwieriger als bei einfacheren Elementen wie dem oben beschriebenen roten Rahmen. Insbesondere sind dabei aufwändige Analysealgorithmen auf Seiten der TrustZone erforderlich, um Ähnlichkeiten für das menschliche Auge festzustellen.

In einer abgewandelten Ausführungsform wird deshalb die graphische Überprüfung von Icons durch eine Signaturprüfung ersetzt. Dabei weisen die von der normalen Laufzeitumgebung an die TrustZone übermittelten Icons eine digitale Signatur auf, die bereits bei der Entwicklung der Software der entsprechenden Applikation eingebracht wurde. Besitzt ein Icon innerhalb der Anzeigedaten DD2 eine solche digitale Signatur, wird nur diese vor Anzeige des Icons auf dem Display D2 von der TrustZone geprüft. Wird die Signatur der einzelnen Icons dabei als gültig bzw. vertrauenswürdig erkannt, erfolgt die Wiedergabe der Anzeigedaten inklusive der Icons ohne Veränderung, da in diesem Fall die Applikation als vertrauenswürdig eingestuft wird. Damit die digitale Signatur möglichst selten geprüft werden muss, kann die TrustZone in einem Cache das Icon selbst oder einen von der TrustZone selbst berechneten Hashwert des Icons speichern. Besitzen ein oder mehrere Icons keine digitale Signatur, können die Anzeigedaten entweder überhaupt nicht auf dem Display D2 dargestellt werden oder es wird anschließend eine graphische Prüfung der Icons dahingehend durchgeführt, ob es sich um Icons handelt, welche eine aktive TrustZone vortäuschen sollen. Ist dies der Fall, werden die Icons aus den Anzeigedaten entfernt oder es wird eine Warnmeldung ausgegeben, so dass der Benutzer darüber informiert ist, dass die Applikation nicht in der gesicherten Lautzeitumgebung läuft.

Die anhand von Fig. 1 beschriebene Ausführungsform der Erfindung wurde basierend auf zwei separat angesteuerten Displays D1 und D2 erläutert. Die Erfindung ist jedoch auch auf Endgeräte anwendbar, bei denen das Display D2 zusammen mit dem größeren Display D1 verwendet wird. Das heißt, die beiden Displays stellen zwei Anzeigebereiche innerhalb eines gemeinsamen großen Displays dar. In diesem Fall kümmert sich das Betriebssystem OS in der normalen Laufzeitumgebung mit entsprechenden Treibern um das Rendern der darzustellenden Daten. Aus der Sicht der einzelnen Applikationen ist dann nur ein einziges Display vorhanden.

Die im Vorangegangenen beschriebene Ausführungsform der Erfindung weist eine Reihe von Vorteilen auf. Insbesondere wird es ermöglicht, dass innerhalb eines, an sich für die gesicherte Laufzeitumgebung vorgesehenen Display-Bereichs auch Anzeigedaten von Applikationen aus einer ungesicherten normalen Laufzeitumgebung wiedergegeben werden. Dabei ist gewährleistet, dass ein Benutzer sicher und leicht erkennt, ob die gerade verwendete Applikation auf der TrustZone läuft bzw. vertrauenswürdig ist. Das Vortäuschen einer aktiven TrustZone durch eine Applikation aus der normalen Laufzeitumgebung wird über eine graphische Überprüfung der Anzeigedaten bzw. gegebenenfalls auch mittels der Überprüfung von Signaturen erreicht. Erfindungsgemäß werden keine zusätzlichen Elemente, wie z.B. eine LED oder ähnliches, benötigt, um an dem Endgerät anzuzeigen, dass die TrustZone gerade aktiv ist.

### Bezugszeichenliste

- NZ: normale Laufzeitumgebung
- TZ: gesicherte Laufzeitumgebung
- AP1, AP2: Applikationen in der normalen Laufzeitumgebung
- TRA, TRB: Trustlets
- RC: Render-Kommandos
- DR1, DR2, TDR2: Display-Renderer
- CH: Überprüfungsalgorithmus
- DD1, DD2, DD2', TDD2: Anzeigedaten
- OS: Betriebssystem in der normalen Laufzeitumgebung
- MC: MobiCore-Betriebssystem
- D1, D2: Displays

## Patentansprüche

1. Verfahren zur Anzeige von Informationen auf einer Anzeigeeinrichtung (D1, D2) eines Endgeräts, insbesondere eines mobilen Endgeräts, wobei in dem Endgerät eine Mikroprozessoreinheit vorgesehen ist, in der eine normale Laufzeitumgebung (NZ) und eine gesicherte Laufzeitumgebung (TZ) implementiert sind, wobei Anzeigedaten (DD1, DD2, DD2', TDD2) zur Wiedergabe auf der Anzeigeeinrichtung (D1, D2) über die normale Laufzeitumgebung (NZ) und die gesicherte Laufzeitumgebung (TZ) bereitstellbar sind, wobei bereitgestellte Anzeigedaten (DD2) über die normale Laufzeitumgebung (NZ) zumindest teilweise an die gesicherte Laufzeitumgebung (TZ) übergeben werden, welche überprüft, ob die übergebenen Anzeigedaten (DD2) ein oder mehrere Sicherheitskriterien erfüllen, wobei die Anzeigedaten (DD2) im Falle, dass sie zumindest ein Sicherheitskriterium nicht erfüllen, verworfen oder derart verändert werden, dass sie bei der anschliessenden Wiedergabe auf der Anzeigeeinrichtung (D1, D2) von über die gesicherte Laufzeitumgebung (TZ) bereitgestellten Anzeigedaten (TDD2) unterschieden werden können, **dadurch gekennzeichnet, dass** das oder die Sicherheitskriterien das Kriterium umfassen, dass die übergebenen Anzeigedaten (DD2) unterscheidbar zu über die gesicherte Laufzeitumgebung (TZ) bereitgestellten Anzeigedaten bei deren Wiedergabe auf der Anzeigeeinrichtung (D1, D2) sind.

2. Verfahren nach Anspruch 1, **dadurch gekennzeichnet, dass** die Anzeigeeinrichtung (D1, D2) ein erstes Anzeigeelement (D1) und ein zweites Anzeigeelement (D2) umfasst, wobei auf dem ersten Anzeigeelement (D1) ausschliesslich durch die normale Laufzeitumgebung (NZ) bereitgestellte Anzeigedaten (DD1) wiedergegeben werden und wobei auf dem zweiten Anzeigeelement (D2) sowohl durch die gesicherte Laufzeitumgebung (TZ) bereitgestellte Anzeigedaten (TDD2) als auch durch die normale Laufzeitumgebung (NZ) bereitgestellte Anzeigedaten (DD2, DD2'), welche zuvor an die gesicherte Laufzeitumgebung (TZ) übergeben und der Überprüfung des oder der Sicherheitskriterien unterzogen würden, wiedergegeben werden.

3. Verfahren nach Anspruch 2, **dadurch gekennzeichnet, dass** die anschliessende Wiedergabe auf der Anzeigeeinrichtung erfolgt auf dem ersten und dem zweiten Anzeigeelement (D1, D2) als zwei separat angesteuerte Displays.

4. Verfahren nach Anspruch 2 oder 3, **dadurch gekennzeichnet, dass** die anschliessende Wiedergabe auf der Anzeigeeinrichtung umfasst die Wiedergabe auf dem ersten und dem zweiten Anzeigeelement (D1, D2) als zwei Displaybereiche eines einzelnen Displays.

5. Verfahren nach einem der vorhergehenden Ansprüche, bei dem die gesicherte Laufzeitumgebung (TZ) eine ARM® TrustZone® ist, auf der das Betriebssystem MobiCore® läuft.

6. Verfahren nach einem der vorhergehenden Ansprüche, **dadurch gekennzeichnet, dass** das Endgerät ein Mobiltelefon ist und auf der normalen Laufzeitumgebung (NZ) das Betriebssystem des Mobiltelefons läuft.

7. Verfahren nach einem der vorhergehenden Ansprüche, **dadurch gekennzeichnet, dass** die gesicherte Laufzeitumgebung (TZ) die an sie übergebenen Anzeigedaten (DD2) im Falle der Nichterfüllung zumindest eines Sicherheitskriteriums derart verändert, dass den Anzeigedaten eine Warnmeldung hinzugefügt wird.

8. Verfahren nach einem der vorhergehenden Ansprüche, **dadurch gekennzeichnet, dass** die gesicherte Laufzeitumgebung (TZ) die an sie übergebenen Anzeigedaten (DD2) im Falle der Nichterfüllung zumindest eines Sicherheitskriteriums derart verändert, dass ein oder mehrere vorbestimmte, in den übergebenen Anzeigedaten (DD2) enthaltene graphische Elemente, anhand derer für einen Benutzer erkennbar ist, dass auf der Anzeigeeinrichtung (D1, D2) wiedergegebene Anzeigedaten durch die gesicherte Laufzeitumgebung (TZ) bereitgestellt werden, abgewandelt oder aus den Anzeigedaten (DD2) entfernt werden.

9. Verfahren nach einem der vorhergehenden Ansprüche, **dadurch gekennzeichnet, dass** die gesicherte Laufzeitumgebung (TZ) die an sie übergebenen Anzeigedaten (DD2) graphisch dahingehend analysiert, ob sie ein oder mehrere vorbestimmte graphische Elemente enthalten, anhand derer für einen Benutzer erkennbar ist, dass auf der Anzeigeeinrichtung (D1, D2) wiedergegebene Anzeigedaten durch die gesicherte Laufzeitumgebung (TZ) bereitgestellt werden, wobei zumindest ein Sicherheitskriterium nicht erfüllt ist, falls die Anzeigedaten (DD2) das oder die vorbestimmten graphischen Elemente umfassen.

10. Verfahren nach Anspruch 8, **dadurch gekennzeichnet, dass** das oder die graphischen Elemente einen vorbestimmen Rahmen und/oder ein oder mehrere animierte Bildelemente und/oder einen Schriftzug umfassen.

11. Verfahren nach einem der vorhergehenden Ansprüche, **dadurch gekennzeichnet, dass** die Überprüfung des oder der Sicherheitskriterien durch die gesicherte Laufzeitumgebung (TZ) eine kryptographische Überprüfung umfasst, wobei die kryptographische Überprüfung die Überprüfung einer oder mehrerer, in den übergebenen Anzeigedaten (DD2) enthaltener digitaler Signaturen umfasst.

12. Verfahren nach Anspruch 11, **dadurch gekennzeichnet, dass** die kryptographische Überprüfung für ein oder mehrere graphische Elemente in den übergebenen Anzeigedaten (DD2) durchgeführt wird, wobei eine oder mehrere digitale Signaturen, welche jeweils einem graphischen Element in den Anzeigedaten (DD2) zugeordnet sind, überprüft werden.

13. Endgerät, insbesondere mobiles Endgerät, umfassend eine Mikroprozessoreinheit, in der eine normale Laufzeitumgebung (NZ) und eine gesicherte Laufzeitumgebung (TZ) implementiert sind, und eine Anzeigeeinrichtung (D1, D2), wobei Anzeigedaten (DD1, DD2, DD2', TDD2) zur Wiedergabe auf der Anzeigeeinrichtung (D1, D2) über die normale Laufzeitumgebung (NZ) und die gesicherte Laufzeitumgebung (TZ) bereitstellbar sind, wobei dass das Endgerät derart ausgestaltet ist, dass bereitgestellte Anzeigedaten (DD2) über die normale Laufzeitumgebung zumindest teilweise an die gesicherte Laufzeitumgebung (TZ) übergeben werden, welche überprüft, ob die übergebenen Anzeigedaten (DD2) ein oder mehrere Sicherheitskriterien erfüllen, wobei die Anzeigedaten (DD2) im Falle, dass sie das oder die Sicherheitskriterien nicht erfüllen, verworfen oder derart verändert werden, dass sie bei der anschliessenden Wiedergabe auf der Anzeigeeinrichtung (D1, D2) von über die gesicherte Laufzeitumgebung (TZ) bereitgestellten Anzeigedaten (TDD2) unterschieden werden können, **dadurch gekennzeichnet, dass** das oder die Sicherheitskriterien das Kriterium umfassen, dass die übergebenen Anzeigedaten (DD2) unterscheidbar zu über die gesicherte Laufzeitumgebung (TZ) bereitgestellten Anzeigedaten bei deren Wiedergabe auf der Anzeigeeinrichtung (D1, D2) sind.

14. Endgerät nach Anspruch 13, welches derart ausgestaltet ist, dass mit dem Endgerät ein Verfahren nach einem der Ansprüche 2 bis 12 durchführbar ist.

## Claims

1. Method for displaying information on a display device (D1, D2) of a terminal, particularly a mobile terminal, wherein the terminal contains a microprocessor unit in which a normal runtime environment (NZ) and a protected runtime environment (TZ) are implemented, wherein display data (DD1, DD2, DD2', TDD2) for reproduction on the display device (D1, D2) can be provided via the normal runtime environment (NZ) and the protected runtime environment (TZ), wherein provided display data (DD2) are transferred via the normal runtime environment (NZ) at least in part to the protected runtime environment (TZ), which checks whether the transferred display data (DD2) meet one or more security criteria, wherein if the display data (DD2) do not meet at least one security criterion then they are rejected or altered such that they can be distinguished from display data (TDD2) provided via the protected runtime environment (TZ) during the subsequent reproduction on the display device (D1, D2), **characterized in that** the security criterion or security criteria comprise(s) the criterion that the transferred display data (DD2) are distinguishable from display data provided via the protected runtime environment (TZ) during the reproduction of said display data on the display device (D1, D2).

2. Method according to Claim 1, **characterized in that** the display device (D1, D2) comprises a first display element (D1) and a second display element (D2), wherein the first display element (D1) is used to reproduce exclusively display data (DD1) provided by the normal runtime environment (NZ) and wherein the second display element (D2) is used to reproduce both display data (TDD2) provided by the protected runtime environment (TZ) and display data (DD2, DD2') provided by the normal runtime environment (NZ) that have previously been transferred to the protected runtime environment (TZ) and subjected to the check on the security criterion or security criteria.

3. Method according to Claim 2, **characterized in that** the subsequent reproduction on the display device takes place on the first and second display elements (D1, D2) as two separately driven displays.

4. Method according to Claim 2 or 3, **characterized in that** the subsequent reproduction on the display device comprises the reproduction on the first and second display elements (D1, D2) as two display areas on a single display.

5. Method according to one of the preceding claims, in which the protected runtime environment (TZ) is an ARM® TrustZone® on which the operating system MobiCore® runs.

6. Method according to one of the preceding claims, **characterized in that** the terminal is a mobile telephone and the operating system of the mobile telephone runs on the normal runtime environment (NZ).

7. Method according to one of the preceding claims, **characterized in that** if at least one security criterion is not met then the protected runtime environment (TZ) alters the display data (DD2) transferred thereto such that the display data have a warning message added to them.

8. Method according to one of the preceding claims, **characterized in that** if at least one security criterion is not met then the protected runtime environment (TZ) alters the display data (DD2) transferred thereto such that one or more predetermined graphical elements that the transferred display data (DD2) contain and that render a user able to recognize that display data reproduced on the display device (D1, D2) are provided via the protected runtime environment (TZ) is/are modified or removed from the display data (DD2) .

9. Method according to one of the preceding claims, **characterized in that** the protected runtime environment (TZ) graphically analyzes the display data (DD2) transferred thereto to determine whether they contain one or more predetermined graphical elements that render a user able to recognize that display data reproduced on the display device (D1, D2) are provided by the protected runtime environment (TZ), wherein at least one security criterion is not met if the display data (DD2) comprise the predetermined graphical element(s) .

10. Method according to Claim 8, **characterized in that** the graphical element(s) comprise(s) a predetermined frame and/or one or more animated image elements and/or a legend.

11. Method according to one of the preceding claims, **characterized in that** the check on the security criterion or security criteria by the protected runtime environment (TZ) comprises a cryptographical check, wherein the cryptographical check comprises the check on one or more digital signatures that the transferred display data (DD2) contain.

12. Method according to Claim 11, **characterized in that** the cryptographical check is performed for one or more graphical elements in the transferred display data (DD2), wherein one or more digital signatures that are respectively associated with a graphical element in the display data (DD2) is/are checked.

13. Terminal, particularly a mobile terminal, comprising a microprocessor unit, in which a normal runtime environment (NZ) and a protected runtime environment (TZ) are implemented, and a display device (D1, D2), wherein display data (DD1, DD2, DD2', TDD2) for reproduction on the display device (D1, D2) can be provided via the normal runtime environment (NZ) and the protected runtime environment (TZ), wherein that the terminal is designed such that provided display data (DD2) are transferred via the normal runtime environment at least in part to the protected runtime environment (TZ), which checks whether the transferred display data (DD2) meet one or more security criteria, wherein if the display data (DD2) do not meet the security criterion or security criteria then they are rejected or altered such that they can be distinguished from display data (TDD2) provided via the protected runtime environment (TZ) during the subsequent reproduction on the display device (D1, D2), **characterized in that** the security criterion or security criteria comprise(s) the criterion that the transferred display data (DD2) are distinguishable from display data provided via the protected runtime environment (TZ) during the reproduction of said display data on the display device (D1, D2).

14. Terminal according to Claim 13, which is designed such that the terminal can be used to carry out a method according to one of Claims 2 to 12.

## Revendications

1. Procédé d'affichage d'informations concernant un dispositif d'affichage (D1, D2) d'un terminal, en particulier d'un terminal mobile, dans lequel il est prévu dans le terminal une unité à microprocesseur dans laquelle un environnement d'exécution normal (NZ) et un environnement d'exécution sécurisé (TZ) sont mis en oeuvre, dans lequel des données d'affichage (DD1, DD2, DD2', TDD2) à reproduire sur le dispositif d'affichage (D1, D2) peuvent être fournies par l'environnement d'exécution normal (NZ) et l'environnement d'exécution sécurisé (TZ), dans lequel des données d'affichage (DD2) fournies par l'environnement d'exécution normal (NZ) sont transférées au moins partiellement à l'environnement d'exécution sécurisé (TZ), lequel vérifie si les données d'affichage (DD2) transférées répondent à un ou plusieurs critères de sécurité, dans lequel, si les données d'affichage (DD2) ne répondent pas à au moins un critère de sécurité, elles sont rejetées ou modifiées de manière à ce qu'elles puissent être différenciées des données d'affichage (TDD2) fournies par l'environnement d'exécution sécurisé (TZ) lors de leur reproduction effectuée ensuite sur le dispositif d'affichage (D1, D2), **caractérisé en ce que** le ou les critères de sécurité comprennent le critère selon lequel les données d'affichage (DD2) transférées peuvent être différenciées de données d'affichage fournies par l'environnement d'exécution sécurisé (TZ) lors de leur reproduction sur le dispositif d'affichage (D1, D2).

2. Procédé selon la revendication 1, **caractérisé en ce que** le dispositif d'affichage (D1, D2) comprend un premier élément d'affichage (D1) et un deuxième élément d'affichage (D2), dans lequel des données d'affichage (DD1) fournies exclusivement par l'environnement d'exécution normal (NZ) sont reproduites sur le premier élément d'affichage (D1) et dans lequel des données d'affichage (TDD2) fournies par l'environnement d'exécution sécurisé (TZ) de même que des données d'affichage (DD2, DD2') fournies par l'environnement d'exécution normal (NZ), lesquelles ont préalablement été transférées à l'environnement d'exécution sécurisé (TZ) et ont été soumises à la vérification du ou des critères de sécurité, sont reproduites sur le deuxième élément d'affichage (D2).

3. Procédé selon la revendication 2, **caractérisé en ce que** la reproduction effectuée ensuite sur le dispositif d'affichage est effectuée sur les premier et deuxième éléments d'affichage (D1, D2) sous la forme de deux afficheurs commandés séparément.

4. Procédé selon la revendication 2 ou 3, **caractérisé en ce que** la reproduction effectuée ensuite sur le dispositif d'affichage consiste à effectuer la reproduction sur les premier et deuxième éléments d'affichage (D1, D2) sous la forme de deux zones d'affichage d'un même afficheur.

5. Procédé selon l'une des revendications précédentes, dans lequel l'environnement d'exécution sécurisé (TZ) est le système ARM® TrustZone® sur lequel est exécuté le système d'exploitation MobiCore®.

6. Procédé selon l'une des revendications précédentes, **caractérisé en ce que** le terminal est un téléphone mobile et **en ce que** le système d'exploitation du téléphone mobile est exécuté sur l'environnement d'exécution normal (NZ).

7. Procédé selon l'une des revendications précédentes, **caractérisé en ce que** l'environnement d'exécution sécurisé (TZ) modifie les données d'affichage (DD2) qui lui sont transférées dans le cas où au moins l'un des critères de sécurité n'est pas satisfait de manière à ce qu'un message d'alarme soit ajouté aux données d'affichage.

8. Procédé selon l'une des revendications précédentes, **caractérisé en ce que** l'environnement d'exécution sécurisé (TZ) modifie les données d'affichage (DD2) qui lui sont transférées dans le cas où au moins l'un des critères de sécurité n'est pas satisfait, de manière à transformer ou à éliminer des données d'affichage (DD2) un ou plusieurs éléments graphiques prédéterminés contenus dans les données d'affichage (DD2) transférées, sur la base desquels un utilisateur peut identifier le fait que les données d'affichage reproduites sur le dispositif d'affichage (D1, D2) sont fournies par l'environnement d'exécution sécurisé (TZ).

9. Procédé selon l'une des revendications précédentes, **caractérisé en ce que** l'environnement d'exécution sécurisé (TZ) analyse graphiquement les données d'affichage (DD2) transférées pour déterminer si elles contiennent un ou plusieurs éléments graphiques prédéterminés sur la base desquels il est possible de déterminer que des données d'affichage reproduites sur le dispositif d'affichage (D1, D2) sont fournies par l'environnement d'exécution sécurisé (TZ) dans lequel au moins un critère de sécurité n'est pas satisfait dans le cas où les données d'affichage (DD2) comprennent ledit ou lesdits éléments graphiques prédéterminés.

10. Procédé selon la revendication 8, **caractérisé en ce que** le ou les éléments graphiques comprennent un cadre prédéterminé et/ou un ou plusieurs éléments d'images animées et/ou une inscription.

11. Procédé selon l'une des revendications précédentes, **caractérisé en ce que** la vérification du ou des critères de sécurité par l'environnement d'exécution sécurisé (TZ) comprend une vérification cryptographique, dans lequel la vérification cryptographique comprend la vérification d'une ou plusieurs signatures numériques contenues dans les données d'affichage (DD2) transférées.

12. Procédé selon la revendication 11, **caractérisé en ce que** la vérification cryptographique est effectuée pour un ou plusieurs éléments graphiques dans les données d'affichage (DD2) transférées, dans lequel une ou plusieurs signatures numériques, qui sont respectivement associées à un élément graphique dans les données d'affichage (DD2), sont vérifiées.

13. Terminal, en particulier terminal mobile, comprenant une unité à microprocesseur dans laquelle sont mis en oeuvre un environnement d'exécution normal (NZ) et un environnement d'exécution sécurisé (TZ), et un dispositif d'affichage (D1, D2) dans lequel des données d'affichage (DD1, DD2, DD2', TDD2) à reproduire sur le dispositif d'affichage (D1, D2) peuvent être fournies par l'environnement d'exécution normal (NZ) et l'environnement d'exécution sécurisé (TZ), dans lequel que le terminal est configuré de manière à ce que des données d'affichage (DD2) transférées par l'environnement d'exécution normal soient transférées au moins partiellement à l'environnement d'exécution sécurisé (TZ), lequel vérifie si les données d'affichage (DD2) transférées répondent à un ou plusieurs critères de sécurité, dans lequel, si les données d'affichage (DD2) ne répondent pas à au moins un critère de sécurité, elles sont rejetées ou modifiées de manière à ce qu'elles puissent être différenciées des données d'affichage (TDD2) fournies par l'environnement d'exécution sécurisé (TZ) lors de leur reproduction effectuée ensuite sur le dispositif d'affichage (D1, D2), **caractérisé en ce que** le ou les critères de sécurité comprennent le critère selon lequel les données d'affichage (DD2) transférées peuvent être différenciées de données d'affichage fournies par l'environnement d'exécution sécurité (TZ) lors de leur reproduction sur le dispositif d'affichage (D1, D2).

14. Terminal selon la revendication 13, qui est configuré de manière à pouvoir mettre en oeuvre un procédé selon l'une des revendications 2 à 12 au moyen du terminal.
